# EUROPÄISCHE PATENTSCHRIFT

(11) **EP 0 401 161 B1**
(45) Veröffentlichungstag und Bekanntmachung des Hinweises auf die Patenterteilung: **21.07.1993**
(21) Anmeldenummer: 90810369.0
(22) Anmeldetag: 21.05.1990
(51) Int. Cl.: C03B 33/02

(54) **Verfahren und Anlage zur Bearbeitung von Glasscheiben**
Method and machine for manufacturing glass plates
Procédé et dispositif pour usiner des plaques de verre

(30) Priorität: 01.06.1989 CH 2061/89
(43) Veröffentlichungstag der Anmeldung: 05.12.1990
(73) Patentinhaber: Bystronic Maschinen AG, CH-4922 Bützberg (CH)
(72) Erfinder: Zumstein, Ernst, CH-3422 Kirchberg (CH)
(74) Vertreter: Steiner, Martin

(56) Entgegenhaltungen:
- EP-A- 0 217 658
- BE-A- 673 905
- DE-A- 1 421 701
- DE-A- 1 905 092
- DE-A- 2 504 111
- FR-A- 1 363 941
- GB-A- 1 054 945
- US-A- 1 972 210
- US-A- 3 494 521

## Beschreibung

Die vorliegende Erfindung betrifft ein Verfahren zur Bearbeitung von Glasscheiben, beispielsweise Automobilscheiben, wobei rohe Scheiben längs einer der endgültigen Scheibenform entsprechenden Linie geschnitten, dann der über die Schnittlinie vorstehende Rand der Rohscheibe längs der Schnittlinie gebrochen und hierauf der Scheibenrand geschliffen wird, und eine Anlage zur Durchführung dieses Verfahrens. Es ist bisher üblich, die einzelnen Arbeitsgänge getrennt, d.h. in verschiedenen Maschinen bzw. Stationen einer Anlage durchzuführen, zwischen welchen Stationen Fördermittel für die rohen bzw. zum Teil bearbeiteten Scheiben (EP-A-0 217 658) vorgesehen sind. Hierbei ist der Aufwand an Raum und Anlageteilen erheblich, auch wenn die einzelnen Stationen in einer geraden Linie hintereinander und in gleichen Abständen angeordnet sind und das Ueberführen von Scheiben synchron mittels starr gekuppelter Greifer erfolgen kann. Zudem ist die Ausnutzung der einzelnen Station schlecht, weil das Schneiden und Brechen jeweils in wesentlich kürzerer Zeit ausgeführt werden kann, als das Schleifen des Scheibenrandes. Im weiteren ist es bisher üblich, bei Modellwechsel eine entsprechende Umrüstung der Brechstation vornehmen zu müssen.

Es ist zwar auch bekannt, ein Schneid- und Brechwerkzeug zugleich längs der zu schneidenden Linie zu führen, was jedoch in vielen Fällen ein sicheres und zuverlässiges Brechen erschwert oder verunmöglicht, indem es nicht möglich ist, die erforderlichen Entlastungsschnitte quer zur Schnittlinie zu führen (DE-A-25 04 111).

Es ist auch bekannt, zur Ausführung gerader Schnitte zum Unterteilen von Glasscheiben bei gleichbleibender Aufspannung der Glasscheibe von oben zu schneiden und anschliessend durch Druck von unten zu brechen. Dieses Vorgehen ist üblich, kann jedoch beim Schneiden bestimmter Formen nicht angewendet werden (FR-A-1 363 941, GB-A-1 054 945).

Ziel vorliegender Erfindung ist es demgemäss, die gesamte Bearbeitung so durchzuführen, dass mit weniger Anlageteilen und kürzeren Umrüstzeiten und somit insgesamt mit einer kompakteren, billigeren Anlage auszukommen ist, deren Anlageteile jedoch optimaler genutzt werden können. Dieses Ziel wird mit dem Verfahren gemäß Anspruch 1 und mit der Anlage gemäß Anspruch 6 erreicht. Es erfolgen somit nicht mehr in der bekannten Weise drei etwa synchron laufende Arbeitszyklen gleicher Länge, sondern das Schneiden und Brechen wird in zwei Zyklen ausgeführt, welche insgesamt gleiche Länge aufweisen wie das Schleifen. Trotzdem ist es möglich, die Steuerung der verschiedenen Bewegungen weitgehend zu vereinheitlichen bzw. aus einem zugrunde liegenden gemeinsamen Programm abzuleiten, indem nämlich zum Schneiden, zum Brechen und zum Schleifen die entsprechenden Werkzeuge gleichartige Bewegungen längs des Scheibenrandes auszuführen haben. Wie erwähnt, sind jedoch diese Programme in dem Sinne nicht synchronisiert als die Abläufe für Schneiden und Brechen je nur etwa halb so lang dauern wie das Schleifen.

Vorzugsweise kann dabei bezüglich ein und desselben, zur Programmierung festgelegten Zentrums geschnitten, gebrochen und geschliffen werden.

Die Erfindung wird nun anhand eines in der Zeichnung dargestellten Ausführungsbeispiels der Anlage näher erläutert.
Fig. 1 zeigt eine Seitenansicht der Anlage,
Fig. 2 eine Draufsicht auf dieselbe, und
Fig. 3 zeigt den Aufbau des Brechwerkzeugs.

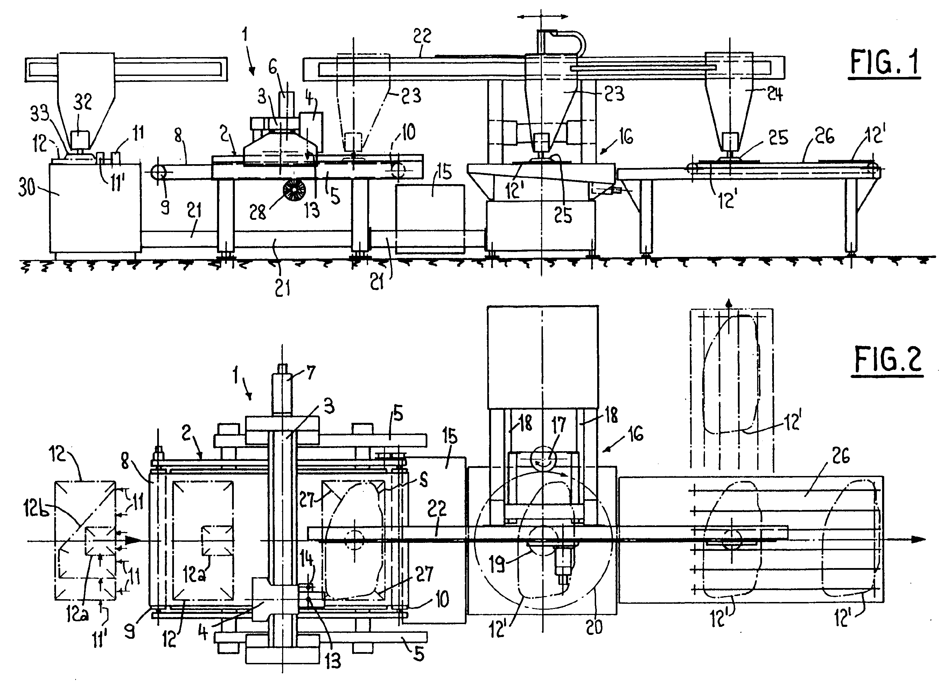

Die dargestellte Anlage weist eine Schneid- und Brechstation 1 auf. Ueber einem Tisch 2 dieser Station ist eine Schneidbrücke 3 angeordnet, längs welcher ein Bearbeitungskopf 4 geführt ist. Die Schneidbrücke 3 ist längs Führungen 5 fahrbar derart, dass der Bearbeitungskopf 4 innerhalb eines bestimmten Bereiches gemäss Längs- und Querkoordinaten in jede Lage gesteuert werden kann. Die CNC-gesteuerten Antriebsmotoren zur Einstellung des Bearbeitungskopfes 4 in Längs- und Querrichtung sind nicht näher dargestellt und entsprechen üblichen Antrieben. Es sind in den Fig. 1 und 2 lediglich Antriebsmotoren 6 und 7 für die Längs- bzw. Querbewegung angedeutet.

Um den Tisch 2 läuft ein Förderband 8, das über eine Umlenkrolle 9 und eine Antriebsrolle 10 gelegt ist.

Dieses Förderband kann um genau bemessene Teillängen angetrieben werden, um Glasscheiben in die Bearbeitungsposition zu bringen. Das Förderband 8 besteht aus gelochtem, nachgiebigem Material. Auf einen dem Tisch 2 vorgelagerten Tisch 30 werden zu bearbeitende Roh-Glasscheiben beliebiger Grössen und Formen angefördert und mittels Längsanschlägen 11 und Seitenanschlägen 11' vorpositioniert. In Fig. 2 ist der Tisch 30 nicht dargestellt, aber es sind verschiedene Formen von Roh-Glasscheiben 12, 12a und 12b sowie schematisch die Längsanschläge 11 und ein verstellbarer Seitenanschlag 11' angedeutet. Ueber den Tischen 2 und 30 ist eine Führung 31 angeordnet, längs welcher ein Uebersetzkopf 32 verschiebbar ist. Mit seinem Saugteller 33 oder mehreren Saugern kann er Roh-Glasscheiben 12 aufnehmen und in bestimmter Position auf das Förderband 8 ablegen. Ein besonderer Vorteil dieser Anordnung besteht darin, dass die Roh-Glasscheiben in der Schneid- und Brechstation und auch später in der Schleifstation nie auf einer Unterlage zur Positionierung verschoben werden müssen und somit nicht durch Glasstaub oder -splitter verletzt werden können.

Am Bearbeitungskopf 4 ist ein Schneidkopf 13 mit einem nicht dargestellten Schneidrad an seinem unteren Ende angeordnet, welcher gegen eine darunterliegende Glasscheibe zugestellt und dann längs einer vorgeschriebenen Schnittlinie S gesteuert werden kann. Am Bearbeitungskopf 4 ist ausserdem ein mechanisches Brechwerkzeug 14 angeordnet, welches gegen eine darunterliegende Glasscheibe abgesenkt werden kann, um den über die Schnittlinie S vorstehenden Rand derselben abzubrechen.

Das hintere, in den Fig. 1 und 2 rechts liegende Ende des Förderbandes 8, liegt über einem Behälter 15 zur Aufnahme von abgebrochenen Glasscherben.

Hinter der Schneid- und Brechstation 1 ist eine Schleifstation 16 angeordnet, in welcher der Rand einer Glasscheibe 12' mittels einer Schleifscheibe 17 bearbeitet werden kann. Die Schleifscheibe 17, mit ihrem nicht dargestellten Antriebsmotor, ist in einem Schleifkopf angeordnet, welcher längs Führungen 18 verschoben werden kann. Die zu schleifende Glasplatte 12' ist dabei auf einem Drehtisch 19 festgesaugt, der während der Bearbeitung der Scheibenkante in Drehung versetzt wird derart, dass die Bearbeitung gemäss Polarkoordinaten erfolgt. Mit einem Kreis 20 ist der grösste mögliche Bearbeitungsradius bezüglich des Drehzentrums angedeutet. Im übrigen sind Aufbau- und Arbeitsweise derartiger Schleifstationen bekannt und bedürfen keiner weiteren Erläuterung.

Der Tisch 30, die Schneid- und Brechstation 1 und die Schleifstation 16 sind je mittels Profilen 21 starr miteinander verbunden, und über den beiden Stationen erstreckt sich in Längsrichtung eine Führungsbahn 22, längs welcher zwei Uebersetzköpfe 23 und 24 verschoben werden können. Die beiden Uebersetzköpfe weisen je einen Saugteller 25 auf, mittels welchem sie eine Glasscheibe erfassen, anheben und in Längsrichtung aus der einen in die andere Station bzw. aus der Schleifstation 16 entweder auf ein Förderband 26 oder gegebenenfalls in eine weitere Bearbeitungsstation, beispielsweise in eine Bohrstation, überführen können. In Fig. 2 ist angedeutet, dass fertig bearbeitete Glasscheiben entweder längs oder quer zur vorherigen Förderrichtung wegtransportiert werden können.

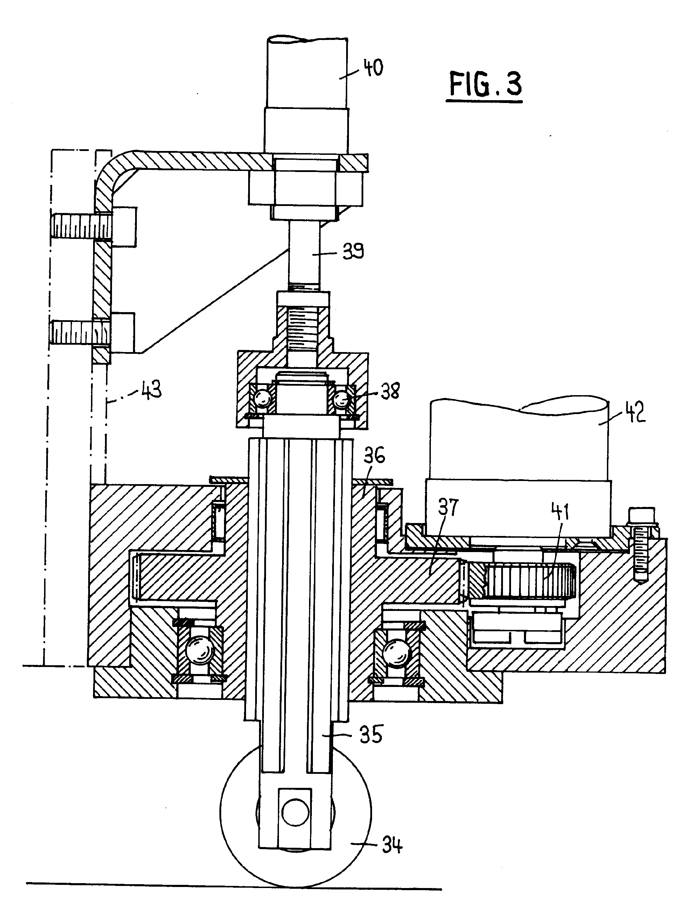

Fig. 3 zeigt den Aufbau des Brechwerkzeugs 14. Es weist ein Brechrad 34 auf, das in einem Stössel 35 drehbar gelagert ist. Der genutete Stössel 35 ist in der Nabe 36 eines Zahnrades 37 drehfest aber axial verschiebbar geführt. Das obere Ende des Stössels 35 ist über ein Lager 38 drehbar mit dem unteren Ende einer Kolbenstange 39 eines doppelt wirkenden Zylinders 40 gekuppelt. In das Zahnrad 37 greift ein Ritzel 41 ein, das auf der Welle eines Steuermotors 42 sitzt. Das Lagergehäuse des Zahnrades 37 und der Zylinder 40 sind mit einem gemeinsamen Träger 43 verbunden. Mittels des Zylinders 40 kann das Brechrad 34 aufgesetzt und abgehoben werden, und es kann zugleich der Druck bestimmt werden, mit welchem das Brechrad auf den Scheibenrand wirkt. Mittels des Motors 42 kann das Brechrad immer so ausgerichtet werden, dass es längs ausserhalb der Schnittlinie S rollen kann.

Das Schneidwerkzeug 13 ist entsprechend aufgebaut mit dem Unterschied, dass anstelle des Brechrades ein Schneidrad vorgesehen ist. Das Schneidrad kann demgemäss ebenfalls abgehoben und mit steuerbarem Druck aufgesetzt werden, und es kann auch stets so ausgerichtet werden, dass es in Schnittrichtung rollt.

Die Arbeitsweise der dargestellten Anlage ergibt sich bereits weitgehend aus der vorstehenden Beschreibung. Roh zugeschnittene Glasscheiben 12, 12a oder 12b werden von links in Fig. 2 auf den Tisch 30 und dann auf das Förderband 8 zugeführt und durch das Förderband 8 um einen vorbestimmten Betrag in die in Fig. 2 rechts der Schneidbrücke 3 dargestellte Bearbeitungslage gebracht. Die hierbei erzielbare Präzision der Positionierung genügt, weil nun erst aus der Rohscheibe eine Scheibe der definitiv gewünschten Form geschnitten und die überschüssigen Ränder abgebrochen werden. Ist diese Position der Rohscheibe 12 erreicht, wird unterhalb des Förderbandes in diesem Bearbeitungsbereich Vakuum erzeugt, so dass die Rohscheibe fest gegen das gelochte Förderband angesaugt und damit unverrückbar festgehalten wird. Zugleich wird auch das Förderband auf dem Tisch 2 festgesaugt. Gemäss einem ersten Steuerprogramm wird nun der Bearbeitungskopf 4 bzw. der Schneidkopf 13 mit dem nicht dargestellten Schneidrad längs der Schnittlinie S geführt, welche der Form der Scheibenkante der zu erstellenden Scheibe 12' entspricht. Zugleich oder in einem zweiten, separaten Arbeitsgang werden Entlastungsschnitte 27 erstellt, welche nachträglich ein sauberes Abbrechen der überschüssigen Scheibenränder gestatten. Ist die Schnittlinie S am ganzen Umfang erstellt und sind auch die Entlastungsschnitte 27 erstellt, wird der Bearbeitungskopf 4 gemäss einem weiteren Programm, welches einen ähnlichen Verlauf hat wie das Programm zum Erstellen der Schnittlinie, längs des Umfangs der Rohscheibe geführt, um mit dem mechanischen Brechwerkzeug 14 bzw. 34 auf dem nachgiebigen Förderband diesen Rand abzubrechen. Ist der Brechvorgang beendet, übernimmt der Uebersetzkopf 23 die zugeschnittene Glasscheibe 12' in bestimmter Position und übersetzt sie auf den Saugteller 19 der Schleifstation 16. Die Uebernahme der Glasscheibe und deren Einsetzen in der Schleifstation erfolgt hierbei mit höchster Präzision, so dass keine neue Positionierung derselben in der Schleifstation erforderlich ist. Mit anderen Worten sind die Bearbeitungspositionen der Scheibe in der Schneid- und Brechstation sowie in der Schleifstation genau zugeordnet und es bedarf keiner neuen Positionierung. Die Bearbeitung erfolgt demgemäss bezüglich desselben von vorneherein festgelegten Bearbeitungszentrums. Damit wird nicht nur die Anlage vereinfacht, sondern die Steuerprogramme für das Schneiden, Brechen und Schleifen können von vorneherein aus einem Grundprogramm hergeleitet werden, gestützt auf die zu erzielende Scheibenform.

Die in die Schleifstation übergesetzte, zugeschnittene Scheibe wird nun geschliffen und nach Beendigung der Schleifoperation durch den Uebersetzkopf 24 auf das Förderband 26 oder ein entsprechendes anderes Förderorgan zum Abtransport übersetzt.

Aus dem Obenstehenden geht hervor, dass die Programme zum Schneiden und Brechen mit praktisch doppelter Geschwindigkeit ablaufen müssen, wie das Programm zum Schleifen der Scheibenkante. Das bietet jedoch keine Schwierigkeiten, sondern im Gegenteil den erheblichen Vorteil, dass alle Anlageteile optimal genutzt sind, indem nämlich der Schneid- und Brechvorgang jeweils wesentlich schneller durchgeführt werden kann als der Schleifvorgang, selbst wenn Entlastungsschnitte 27 erstellt werden müssen.

Bei jedem Vorschieben einer Rohscheibe aus der Uebernahmeposition in die Bearbeitungsposition der Schneid- und Brechstation fallen vorher auf dem Förderband 8 zurückbleibende, abgebrochene Glasscherben in den Behälter 15 und nachträglich werden feine auf dem Förderband verbleibende Glassplitter durch eine Bürste 28 entfernt.

Anstelle des erwähnten mechanischen Brechwerkzeugs 14 kann ein Brenner an sich bekannter Art zum thermischen Brechen vorgesehen werden, in welchem Falle die Glasscheiben in der Schneid- und Brechstation für thermisches Brechen passend abgestützt werden müssen. Aehnlich wie das mechanische Brechwerkzeug wird der Brenner beim Brechvorgang nach vorgegebenem Programm längs der Schnittlinie S geführt.

## Patentansprüche

1. Verfahren zur Bearbeitung von Glasscheiben, wobei rohe Scheiben längs einer der endgültigen Scheibenform entsprechenden Linie geschnitten, dann der über die Schnittlinie vorstehende Rand der Rohscheibe längs der Schnittlinie gebrochen und hierauf der Scheibenrand der Formscheibe geschliffen wird, dadurch gekennzeichnet, dass bei gleichbleibender Aufspannung und Position der Scheibe mittels zweier entsprechender, aufeinanderfolgender Steuerprogramme geschnitten und gebrochen wird, deren Gesamtdauer etwa derjenigen des Schleifprogramms entspricht.

2. Verfahren nach Anspruch 1, dadurch gekennzeichnet, dass mittels ein und desselben Bearbeitungskopfes und derselben Antriebsmittel für denselben geschnitten und gebrochen wird.

3. Verfahren nach Anspruch 1 oder 2, dadurch gekennzeichnet, dass die Glasscheibe auf einer Unterlage liegend geschnitten und mechanisch oder thermisch gebrochen wird.

4. Verfahren nach einem der Ansprüche 1 bis 3, dadurch gekennzeichnet, dass Aenderungen der zu schneidenden und brechenden Scheibenform ausschliesslich durch Programmwechsel, ohne mechanische Umrüstungen vorgenommen werden.

5. Verfahren nach einem der Ansprüche 1 bis 4, dadurch gekennzeichnet, dass bezüglich ein und desselben, beim Programmieren festgelegten Zentrums der Glasscheibe geschnitten, gebrochen und geschlieffen wird.

6. Anlage zur Durchführung des Verfahrens nach Anspruch 1, mit Stationen (1,16) zum Schneiden, Brechen und Schleifen von Glasscheiben, dadurch gekennzeichnet, dass eine Station (1) mit einer einzigen Aufspannstelle für Glasscheiben (12) und mit einem gemeinsamen Bearbeitungskopf (4) mit einem Schneidewerkzeug (13) und einem Brechsystem (14) vorgesehen ist, wobei das Schneidewerkzeug (13) und das Brechsystem wahlweise wirksam sind, und dass eine Steuerung vorgesehen ist mit Steuerprogrammen für das aufeinanderfolgende Schneiden, Brechen und Schleifen der Glasscheiben, wobei die Gesamtdauer der Steuerprogramme für das Schneiden und das Brechen etwa derjenigen des Schleifprogramms entspricht.

7. Anlage nach Anspruch 6, gekennzeichnet durch einen einzigen Greifer (23) zum Uebersetzen von Scheiben (12) aus der Schneid- und Brechstation (1) in die Schleifstation (16).

8. Anlage nach Anspruch 6 oder 7, dadurch gekennzeichnet, dass die Aufspannstelle eine gelochte Auflage (8) für Glasscheiben (12) und unterhalb derselben Kanäle eines Vakuumsystems aufweist.

9. Anlage nach einem der Ansprüche 6 bis 8, dadurch gekennzeichnet, dass in der Schneid- und Brechstation (1) keine Anschläge zur Positionierung einlaufender Rohscheiben (12) vorgesehen sind, indem Mittel zum Vorpositionieren und Uebersetzen der Rohscheiben (12) in die Schneid- und Brechstation in vorpositionierter Lage vorgesehen sind.

## Claims

1. Method for manufacturing glass plates, rough plates being cut along of a line corresponding to the definitive form of the plate, then the border of the rough plate projecting from the cutting line is broken along the cutting line and then the border of the formed plate is grinded, characterized in that for the same fixing and position of the plate, one cuts and breaks by means of two corresponding consecutive control programs, the total duration of which corresponding to approximately the one of the grinding program.

2. Method according to claim 1, characterized in that one cuts and breaks by means of a unique manufacturing head and by the same driving means of the latter.

3. Method according to claim 1 or 2, characterized in that the glass plate is cut while lying on a base and in that it is broken mechanically or thermally.

4. Method according to one of the claims 1 to 3, characterized in that modifications of the form of the plate to be cut and broken are executed exclusively by a changing of program, without any mechanical readjustment.

5. Method according to one of the claims 1 to 4, characterized in that one cuts , breaks and grinds with respect to a unique center of the plate fixed at the time of the programmation.

6. Installation for the realization of the method according to claim 1, with stations (1,16) for cutting, breaking and grinding of glass plates, characterized in that it is provided a station (1) with a unique place of fixation for glass plates (12) and a common manufacturing head (4) with a cutting tool (13) and a breaking system (14), the cutting tool (13) and the breaking system being effective at choice and in that a control is provided with a control program for the consecutive oprations of cutting, breaking and grinding of the glass plates, the total duration of the control programs for cutting and breaking corresponding to about the one for the grinding.

7. Installation according to claim 6,characterized in that it is foreseen a unique grib (23) for transfering the plates (!2) from the cutting and breaking station to the grinding station.

8. Installation according to claim 6 or 7, characterized in that the position of fixation comprises a pierced support (8) for glass plates (12), and under the latter channels of a vacuum system.

9. Installation according to one of the claims 6 to 8, characterized in that in the cutting-breaking station (1) it is not provided positioning abutments for the entering rough plates, and in that it is provided means for prepositioning and transfering rough plates (12) in the cutting-breaking stations, in prepositioned condition.

## Revendications

1. Procédé d'usinage de plaques de verre, des plaques brutes étant coupées le long d'une ligne correspondant à la forme définitive de la plaque, puis le bord de la plaque brute dépassant de la ligne de coupe est cassé le long de la ligne de coupe et ensuite le bord de la plaque de forme est meulé, caractérisé en ce que pour la même fixation et position de la plaque, on coupe et casse à l'aide de deux programmes de commande correspondants se suivant, dont la durée totale correspond environ à celle du programme de meulage.

2. Procédé selon la revendicagion 1, caractérisé en ce qu'on coupe et casse à l'aide d'une seule et même tête d'usinage et du même moyen d'entraînement de celle-ci.

3. Procédé selon la revendication 1 ou 2, caractérisé en ce que la plaque de verre est découpée couchée sur une base et qu'elle est cassée mécaniquement ou thermiquement.

4. Procédé selon l'une de revendications 1 à 3, caractérisé en ce que des modifications de la forme de la plaque à couper et casser sont exécutées exclusivement par un changement de programme, sans rajustement mécanique.

5. Procédé selon l'une des revendicatiosn 1 à 4, caractérisé en ce qu'on coupe, casse et meule par rapport à un seul et même centre de la plaque fixé lors de la programmation.

6. Installation pour la mise en oeuvre du procédé selon la revendication 1, avec des stations (1, 16) pour découper, casser et meuler des plaques de verre, caractérisé en ce qu'il est prévu une station (1) avec une seule place de fixation pour des plaques de verre (12) et une tête d'usinage commune (4) avec un outil de découpage (13) et un système de cassage (14), l'outil de découpage (13) et le système de cassage étant efficaces au choix et en ce qu'une commande est prévue avec un programme de commande pour la suite des opérations de découpage, cassage et meulage des plaques de verre, la durée totale des programmes de commande pour le découpage et le cassage correspondant environ à celui du meulage.

7. Installation selon la revendication 6, caractérisée en ce qu'il est prévu par un seul grappin (23) pour transférer les plaques (12) de la station de découpage et cassage dans la station de meulage.

8. Installation selon la revendication 6 ou 7, caractérisée en ce que la position de fixation comprend un support percé (8) pour des plaques de verre (!2), et sous celui-ci des canaux d'un système de vide.

9. Installation selon l'une des revendications 6 à 8, caractérisé en ce que dans la station de découpage-cassage (1) il n'est pas prévu de butées de positionnement des plaques brutes entrantes (12), en ce qu'il est prévu des moyens pour prépositionner et transférer des plaques brutes (12) dans les stations de découpage-cassage en condition prépositionnée.
